# FASCICULE DE BREVET EUROPEEN

(11) **EP 0 609 142 B1**
(45) Date de publication et mention de la délivrance du brevet: **01.09.1999**
(21) Numéro de dépôt: 94400164.3
(22) Date de dépôt: 26.01.1994
(51) Int. Cl.: H04N 1/44, H04L 9/32

(54) **Dispositif de sécurisation de transmission de télécopies, et télécopieur sécurisé comportant un tel dispositif**
Vorrichtung zur sicheren Fernkopierübertragung und sicherer Fernkopierer
Apparatus for secure facsimile transmission and a secure facsimile comprising such a device

(30) Priorité: 28.01.1993 FR 9300867
(43) Date de publication de la demande: 03.08.1994
(60) Demande divisionnaire: 98203239.3
(73) Titulaire: FRANCE TELECOM, 75015 Paris (FR); LA POSTE, F-92777 Boulogne Billancourt Cédex (FR)
(72) Inventeur: Le Corre, Hervé, F-14930 Eterville (FR); Girault, Marc, F-14000 Caen (FR); Revillet, Marie-Josèphe, F-14790 Verson (FR)
(74) Mandataire: Dubois-Chabert, Guy

(56) Documents cités:
- EP-A- 0 516 898
- EP-A- 0 542 703
- EP-A- 0 547 837
- WO-A-92/09161
- GB-A- 2 217 949
- US-A- 4 926 325
- US-A- 5 157 726

## Description

### Domaine technique

La présente invention concerne un dispositif et un procédé de sécurisation de transmission de télécopies et un télécopieur comportant un tel dispositif.

### Etat de la technique antérieure

Les points forts du service de télécopie sont la simplicité d'emploi, l'utilisation du réseau téléphonique public, la transmission directe. Mais il existe un point faible : la sécurité. Ce dernier point exclut de conférer un statut juridique à un document transmis en télécopie.

En effet, les niveaux de sécurité offerts par les télécopieurs de l'art connu sont insuffisants et inadaptés à la demande de certains utilisateurs. Les besoins en matière de sécurité en télécopie sont multiples : confidentialité, authentification, intégrité, non-répudiation, détection de rejeu.

Les télécopieurs actuellement sur le marché n'offrent pas par exemple de réelle assurance d'intégrité, les altérations pouvant être dues à des incidents de transmission, de scannérisation, d'impression ou à des actes volontaires de falsification.

Des appareils de chiffrement ont été développés par divers constructeurs afin de remédier à ce manque de sécurité, mais ils ne sont basés que sur le chiffrement et ne permettent pas une large utilisation, dans un groupe ouvert d'abonnés. De plus ils nécessitent un échange préalable de clés.

L'invention a pour but de donner un niveau de sécurité suffisant au service de télécopie sur réseau téléphonique commuté public, afin de répondre aux besoins des utilisateurs en matière de sécurité et de permettre une reconnaissance juridique pour les documents transmis par ce service.

Un document de l'art antérieur US-A-5 157 726 décrit un système pour authentifier une sortie sur support papier d'un document original qui comprend, du côté émetteur, une première machine de copiage spéciale, avec utilisation d'une carte d'identification pour activer cette machine, et du côté récepteur une seconde machine de copiage similaire à la première. La première machine de copiage, à partir du document original, génère une signature qui est apposée sur la copie, constituant ainsi une copie du document original signée numériquement.

### Exposé de l'invention

L'invention concerne tout d'abord un dispositif de sécurisation de transmission de télécopies comprenant :
- un interface utilisateur permettant le dialogue avec l'utilisateur ;
- un module de sécurité permettant la production et la vérification de signatures numériques, qui comporte avantageusement un lecteur de cartes à mémoire propre à chaque utilisateur ;
- éventuellement un module de chiffrement et de déchiffrement qui n'existe que dans le cas où l'émetteur a besoin de confidentialité en mode connexion.

L'invention concerne également une nouvelle génération de télécopieurs dits "sécurisés", comprenant un tel dispositif de sécurisation interne.

Avantageusement les informations "sécuritaires" sont transmises dans une page supplémentaire dite "sécuritaire".

Avantageusement l'invention permet d'obtenir les résultats suivants :
- pour l'utilisateur émetteur :
   . recevoir un accusé de réception, pour être certain que le télécopieur destinataire a bien reçu le document,
   . éviter une répudiation en réception, pour pouvoir prouver a posteriori qu'il a bien envoyé le document ;
- pour l'utilisateur destinataire :
   . permettre une authentification de l'expéditeur, pour être certain de son identité,
   . éviter une répudiation en émission, pour pouvoir prouver a posteriori qu'il a bien reçu le document ;
- pour les deux télécopieurs émetteur et destinataire :
   . obtenir la confidentialité : pour s'assurer qu'aucune personne non autorisée ne puisse prendre connaissance des informations transmises,
   . obtenir l'intégrité : pour s'assurer que les informations transmises ne sont pas modifiables sans que le destinataire s'en aperçoive,
   . éviter tout rejeu : pour qu'il soit impossible de refaire à la place de l'émetteur une communication identique.

### Brève description des dessins

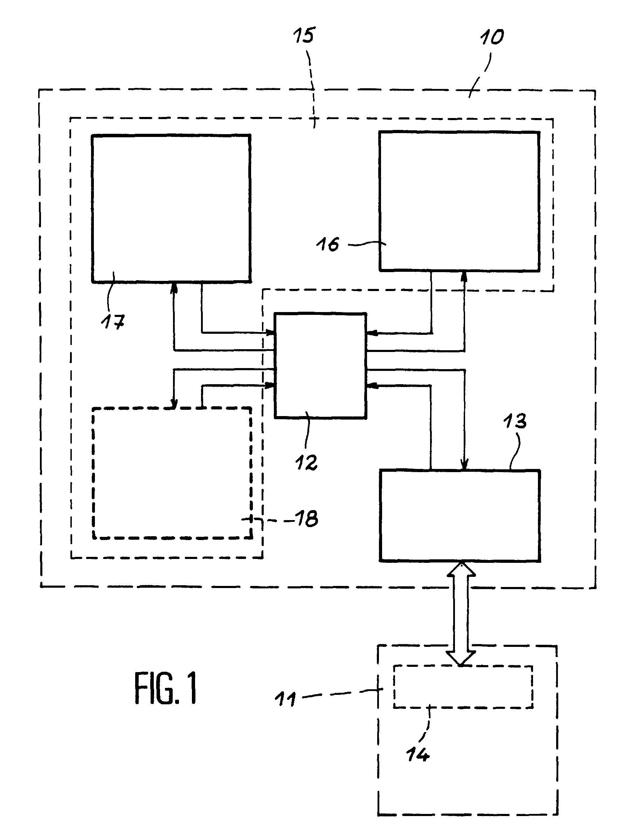

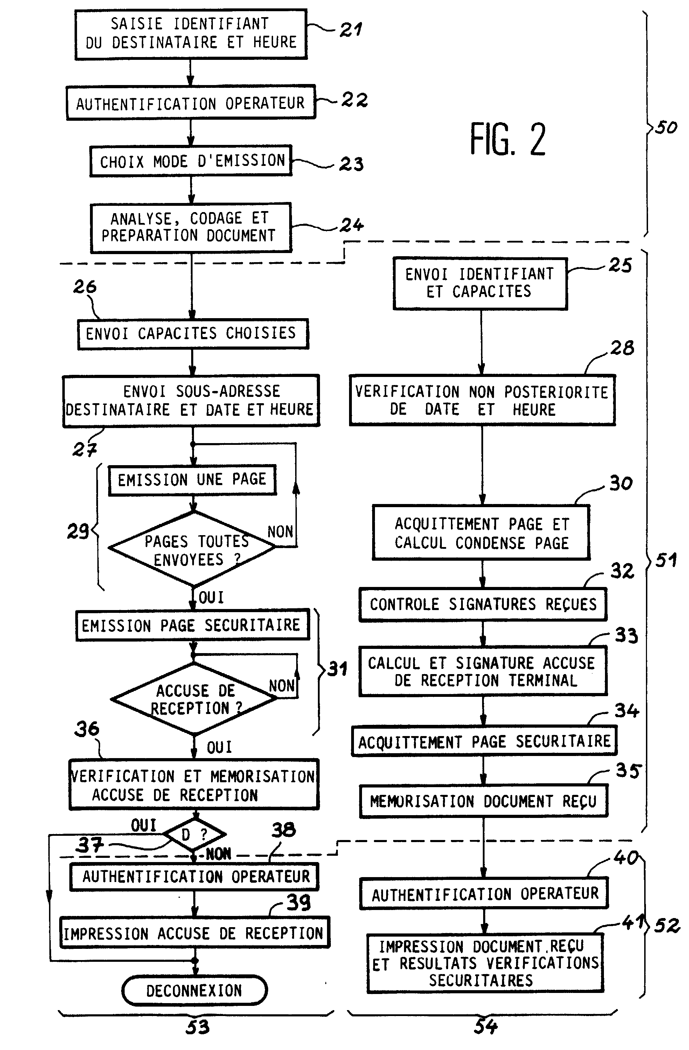

- La figure 1 illustre un télécopieur comprenant le dispositif de sécurisation de l'invention ;
- le figure 2 représente un organigramme du procédé de transmission de télécopies de l'invention.

### Exposé détaillé des modes de réalisation

La figure 1 illustre la liaison entre deux télécopieurs émetteur et destinataire 10 et 11. Le premier télécopieur 10 comprend un organe de contrôle 12 comportant une mémoire de masse et un module de communication 13 qui peut communiquer avec le module de communication 14 du second télécopieur 11.

Conformément à l'invention, le premier télécopieur 10 (et éventuellement le télécopieur 11) comprend, de plus, un dispositif de sécurisation 15.

Ce dispositif 15 comprend :
- un module interface utilisateur 16 qui permet le dialogue avec celui-ci ;
- un module de sécurité 17 qui permet la production et la vérification de signatures numériques et la lutte contre le "rejeu", et qui peut comporter avantageusement un lecteur de carte à mémoire apte à lire une telle carte propre à chaque utilisateur (ou groupe d'utilisateurs).

Ce dispositif peut comprendre en outre :
- un module de chiffrement et de déchiffrement 18 qui n'existe que lorsque les deux télécopieurs 10 et 11 ont besoin de confidentialité en mode émission. Dans ce cas le télécopieur 11 doit également comprendre ce module ainsi que le module de sécurité.

Ce dispositif 15 peut être un dispositif autonome destiné à compléter un télécopieur classique, ou un dispositif interne, partie d'un télécopieur appartenant à une nouvelle génération de télécopieurs dits "sécurisés".

L'invention concerne également un procédé de transmission sécurisé point-à-point de télécopies. Un tel procédé comprend :
- une étape 50 de préparation du télécopieur émetteur ;
- une étape 51 de transmission ;
- une étape 52 de consultation.

Ces étapes de fonctionnement sont représentées sur la figure 2, du côté émetteur 53 et du côté récepteur 54. Après la mise en place du document à émettre sur le plateau du télécopieur émetteur, ou la sélection éventuelle d'un document déjà mémorisé dans la mémoire de ce télécopieur, pendant l'étape 50 de préparation du télécopieur émetteur :
- on saisit l'identifiant du destinataire (phase 21) ou on le consulte sur un annuaire électronique, et on saisit l'heure d'émission qui peut être immédiate ou différée ;
- on authentifie, éventuellement, L'opérateur auprès du module de sécurité par insertion de la carte à mémoire de celui-ci et saisie de son code secret (phase 22) ;
- si cette authentification a été réalisée correctement, on choisit le mode d'émission (phase 23), c'est-à-dire :
   . soit le mode standard qui est le mode de transmission des télécopieurs de l'art connu,
   . soit le mode sécurisé qui permet de répondre aux besoins d'intégrité, de non-répudiation et d'authentification tels que définis précédemment,
   . soit le mode chiffré qui permet de répondre aux besoins du mode sécurisé ainsi qu'au besoin de confidentialité, en précisant qu'un changement de mode (repli) est autorisé ;
- on analyse (scanner) et code le document, ce qui permet de réduire le volume de celui-ci. On prépare "sécuritairement" le document avec calcul des condensés, calcul et mémorisation des signatures, éventuel chiffrement si celui-ci a été demandé, et génération d'une page sécuritaire (phase 24). Cette génération de page "sécuritaire" peut être remplacée par l'émission d'informations "sécuritaires" sur une ou sur toutes les pages du document considéré.

Le dialogue avec l'opérateur est alors terminé. Un message est émis, l'opérateur peut alors retirer sa carte à mémoire.

L'étape 51 de transmission peut alors commencer immédiatement, ou en différé, avec établissement automatique de la communication. Il y a envoi de part et d'autre de l'identifiant (CSI) du terminal et de ses capacités (deux bits pour la sécurité : sécurisé, chiffrant dans la trame DIS) (phases 25 et 26). Ensuite, du côté télécopieur émetteur, pendant cette étape 51 :
- on envoie la sous-adresse du télécopieur destinataire, et la date-heure de signature de la première page dans la trame prévue pour le mot de passe (phase 27). Le terminal récepteur peut alors vérifier la non-postériorité de la date-heure (phase 28). S'il y a désaccord, le terminal récepteur est déconnecté ;
- on émet chaque page du document (phase 29), contenant éventuellement des informations sécuritaires.

Le terminal destinataire acquitte successivement chaque page et calcule le condensé de chaque page reçue (phase 30).

Le terminal émetteur émet éventuellement la page dite "sécuritaire" et attend un accusé de réception (phase 31).

Le terminal destinataire réalise une étape de vérification :
. il contrôle les signatures reçues à partir des condensés précalculés (phase 32) ;
. il calcule et signe l'accusé de réception "terminal" (phase 33) ;
. il acquitte la page "sécuritaire" ou les informations "sécuritaires" en joignant l'accusé de réception "terminal" (phase 34) ;
. il mémorise le document reçu dans un répertoire protégé (phase 35).

Après vérification et mémorisation de l'accusé de réception (phase 36), le terminal émetteur peut être alors déconnecté.

Pendant l'étape 52 de consultation immédiate ou en différé :
- du côté terminal émetteur (test 37 déconnexion D ?), il y a :
   . authentification de l'opérateur auprès du module de sécurité (avec éventuelle insertion de la carte à mémoire et saisie du code secret) (phase 38),
   . impression (ou consultation) de l'accusé de réception terminal (phase 39) ;
- du côté terminal destinataire, il y a :
   . authentification de l'opérateur auprès du module de sécurité (avec éventuelle insertion de la carte à mémoire et saisie du code secret) (phase 40),
   . impression (ou consultation) du document reçu et des résultats des vérifications sécuritaires (phase 41).

Le but de l'invention est donc que tout télécopieur puisse recevoir des télécopies ayant un niveau minimum de sécurité. Par contre, pour envoyer des télécopies sécurisées, les télécopieurs émetteurs doivent appartenir à une nouvelle génération, ou utiliser le dispositif de sécurisation défini ci-dessus, placé en coupure sur la ligne téléphonique. Par la suite on appellera indifféremment "télécopieur sécurisé", un terminal de nouvelle génération, ou un terminal classique complété par le dispositif de sécurisation de l'invention générant entre autres le mode correction d'erreur.

Les télécopieurs sécurisés disposent du mode correction d'erreur du protocole "des procédures pour la transmission par télécopie de documents dans le réseau téléphonique connecté public" dénommé "T30" recommandé par le CCITT, de la possibilité d'interpréter des pages en mode caractère. Ils disposent en outre d'un module de sécurité 17.

Pour les terminaux multi-utilisateurs, le module de sécurité 17 est composé d'un lecteur de cartes à mémoire pouvant lire une carte à mémoire, propre à chaque utilisateur. Dans le cas d'un terminal mono-utilisateur, ou protégé physiquement, le module de sécurité est intégré dans le télécopieur.

Dans les deux cas ce module de sécurité 17 permet de signer et, optionnellement, de générer une clé de session pour un chiffrement éventuel des documents à émettre. Le chiffrement proprement dit est effectué dans le télécopieur par le module de chiffrement et de déchiffrement 18.

Aucune trame supplémentaire n'est nécessaire dans le protocole "T30", mais quelques aménagements doivent être apportés ; entre autres, un accusé de réception doit être généré par le terminal destinataire pour compléter le signal de confirmation de message, dénommé "MCF" dans ce protocole.

Chaque personne utilisatrice en mode sécurisé doit avoir son propre code ou identifiant, qui est transmis dans le protocole.

Les mécanismes de base choisis dans l'invention pour répondre à ces besoins de sécurité sont donc la signature numérique et le chiffrement. Le chiffrement n'est utilisé que dans le cas où l'émetteur a besoin de confidentialité en mode connexion. Mais l'utilisation de ces mécanismes nécessite la transmission d'informations sécuritaires. Ces informations sont transmises avantageusement dans la page supplémentaire, dite "sécuritaire" ajoutée au document et générée par le télécopieur émetteur.

Chaque information transmise en en-tête de cette page "sécuritaire" est numériquement signée, signatures figurent sur la page sécuritaire. Ces informations sont les identifiants des personnes émettrice et destinataire , l'aléa ayant permis de générer les signatures, la date et l'heure de début de transmission du document, le nombre de pages transmises (la page sécuritaire non comprise). Le corps de la page contient le numéro suivi de la signature de chaque page du document transmis en mode sécurisé (la page sécuritaire non comprise).

La page "sécuritaire" est transmise soit en mode caractère, soit en format graphique (c'est-à-dire codée dans l'un des modes de codage d'image approprié à la télécopie) si le télécopieur du destinataire ne possède pas des capacités nécessaires à l'interprétation du mode caractères de la page sécuritaire.

Lorsque la page sécuritaire est reçue, en mode caractère, le télécopieur destinataire sécurisé régénère cette page en mode graphique afin que l'utilisateur puisse en conserver un exemplaire "papier".

La "bitmap" est un fichier qui peut être obtenu par scannérisation d'un document. Ce fichier est différent pour chaque scannérisation d'un même document. Pour sa signature, il est proposé de signer numériquement ce fichier codé dans un des modes recommandés pour la télécopie. Le destinataire devra vérifier ces signatures à la réception et mettre en mémoire le document pour toute vérification ultérieure.

L'utilisateur désirant émettre une télécopie sécurisée doit insérer sa carte à mémoire contenant ses clés secrètes afin qu'elle calcule les signatures et génère une clé de session si besoin est. Sur un télécopieur sécurisé, si la carte à mémoire du destinataire est insérée au moment de la réception, le déchiffrement s'effectue en ligne ; sinon le document est stocké chiffré dans la boîte aux lettres de celui-ci et déchiffré au moment de la consultation.

En cas d'émission vers un télécopieur sécurisé, le télécopieur récepteur vérifie que la date-heure du document émis n'est pas postérieure à sa propre date (à un epsilon près), sinon le récepteur déconnecte la communication. On appelle date-heure, la date et l'heure de signature de la première page du document émis. En cas de communication internationale, il est nécessaire d'utiliser l'heure G.M.T.

On entend par clé de session, la suite de bits qui est utilisée pour générer la suite pseudo-aléatoire utilisée pour chiffrer le fichier bitmap codé. La suite pseudo-aléatoire doit être la même chez l'émetteur et le destinataire. La clé de session est générée par un algorithme basé sur l'identité, qui permet sans aucun échange de calculer un secret détenu par les deux correspondants et eux seuls.

Chaque entité (émetteur A ou destinataire B) désireuse d'utiliser les fonctions de chiffrement/ déchiffrement possède une clé secrète "S" générée par une autorité, à partir de son identifiant "I".

Aucun utilisateur n'a connaissance de la clé secrète. Elle est stockée dans son module de sécurité personnel (carte à mémoire par exemple) et n'est accessible qu'à l'autorité l'ayant générée.

Une clé K_{AB} = g(S_{A},I_{B}) = g(S_{B},I_{A}) sert à générer une clé de session. La clé K_{AB} est diversifiée par un aléa (par exemple la date-heure) afin de générer une clé de session K : K = f(K_{AB}, aléa).

Pour une communication, l'émetteur A et le destinataire B disposent donc d'une clé commune qu'ils sont seuls à pouvoir générer puisque seuls possesseurs d'une des clés secrètes S_{A} ou S_{B}. Les paramètres à transmettre sont l'aléa et l'identité de l'émetteur.

Il n'y a pas de contrainte particulière sur la signature puisque le signataire a la faculté d'envoyer facilement des informations sécuritaires. La signature de chacune des pages doit mettre en jeu des éléments secrets mémorisés dans la carte à mémoire de l'utilisateur, et un aléa (la date-heure par exemple), ainsi que le numéro de la page.

Les éléments secrets (ou clés secrètes) de chaque utilisateur sont stockés dans sa carte à microprocesseur. Chaque carte possède essentiellement trois éléments secrets :
- le premier élément est un code confidentiel, permettant à la carte d'authentifier son légitime propriétaire ;
- le second élément (S_{A} voir plus haut) permet à la carte de l'émetteur de calculer une clé de session commune avec la carte du destinataire. Cette clé de session servira à chiffrer le document ;
- le troisième élément permet à la carte de l'émetteur de calculer une signature numérique, vérifiable par n'importe quelle autre carte appropriée à cette invention.

En plus de ces éléments secrets, la carte doit contenir l'identifiant de l'utilisateur.

Chacun des services de sécurité suivants est basé sur le mécanisme de signature (vérification de signature) appliqué à des données différentes :
- l'intégrité repose sur la signature. Elle est effectuée pour chaque page. Toutes les signatures sont transmises sur la page "sécuritaire", en fin de document. La signature d'une page porte sur le contenu de la page, le numéro de page et l'aléa ;
- le rejeu est une fraude consistant à réémettre, parfois à l'insu du véritable émetteur, un document vers un même destinataire sans que celui-ci ne puisse s'en apercevoir. Les télécopieurs sécurisés, en réception, mémorisent les heures de signature et les identifiants des émetteurs des communications ayant eu lieu dans les dernières quarante huit heures. Le télécopieur récepteur devra mettre en garde le destinataire :
   . si l'écart entre la date-heure de transmission est supérieur à quarante huit heures,
   . si la même date-heure pour un même émetteur a déjà été enregistrée durant les dernières quarante huit heures.

La date-heure signée par l'émetteur est transmise dans la page "sécuritaire". Elle est également transmise, non signée, en début de protocole dans la trame PWD ("Pass-Word") du protocole "T30".
- Le destinataire authentifie l'émetteur en vérifiant la signature de l'identifiant de l'émetteur transmise en page "sécuritaire".
- Pour se protéger d'un émetteur malhonnête contestant le contenu d'un document, le destinataire doit conserver, sous forme électronique, le document reçu associé à la signature. Cette fonction impose des capacités de stockage électronique chez le destinataire. La conformité de la signature avec le document présenté et l'identité de l'émetteur permet à un juge d'authentifier le document.
- Pour se protéger d'un destinataire malhonnête contestant le contenu d'un document, l'émetteur est obligé de conserver celui-ci sous forme électronique. Pour différencier les deux documents présentés devant un juge, on vérifie la signature du document émis et celle du document reçu. Le destinataire peut toujours prétendre ne pas avoir reçu le document, mais il est possible de juger de la bonne foi de l'émetteur si le destinataire déclare l'avoir reçu.
- Le terminal destinataire peut confirmer la bonne réception du document en retournant, après vérification des signatures de chaque page du document, un accusé de réception. Cet accusé est constitué de la signature du contenu de la page "sécuritaire" ou des informations "sécuritaires" et d'un octet d'information contenant les éventuels motifs de refus de réception du document. Cette suite d'octets est transmise dans le signal d'acquittement positif "MCF" de la recommandation "T30" du CCITT, dont la présente invention propose l'extension.

La confidentialité en mode connexion d'un document transmis est assurée par le chiffrement des données télécopie. Le chiffrement est appliqué après codage du document par les algorithmes recommandés pour la télécopie, ceci afin de ne pas nuire à l'efficacité de la compression que permettent ces algorithmes.

La confidentialité hors connexion est assurée par un mécanisme de "boîte aux lettres" personnelle accessible à l'utilisateur sous réserve de présentation de sa carte à mémoire et du code confidentiel associé.

## Revendications

1. Dispositif de sécurisation de transmission de télécopies, comprenant :
- un interface utilisateur (16) permettant d'établir un dialogue avec celui-ci ;
caractérisé en ce qu'il comprend :
- un module de sécurité (17) permettant de détecter tout rejeu, pour éviter une réémission d'un document vers un même destinataire sans que celui-ci ne puisse s'en apercevoir, d'assurer une non-répudiation en émission et en réception, et une vérification d'intégrité de l'ensemble des informations transmises, en utilisant un mécanisme de production et de vérification de signatures numériques ; ce module de sécurité (17) comprenant un lecteur de cartes à mémoire, apte à lire une carte à mémoire propre à l'utilisateur dans laquelle sont stockés :
- un premier élément secret qui est un code confidentiel, permettant à la carte d'authentifier son légitime propriétaire ;
- un second élément secret (S_{A}) qui permet à la carte de l'émetteur de calculer une clé de session commune avec la carte à mémoire du destinataire, cette clé de session servant à chiffrer le document ;
- un troisième élément secret qui permet à la carte à mémoire de l'émetteur de calculer une signature numérique, vérifiable par n'importe quelle autre carte appropriée ;
- et l'identifiant de l'utilisateur.

2. Dispositif de sécurisation selon la revendication 1, caractérisé en ce qu'il comprend un module de chiffrement et de déchiffrement (18).

3. Télécopieur sécurisé comprenant :
- un organe de contrôle (12) ;
- un module de communication (13) ;
- un module interface utilisateur (16) qui permet d'établir un dialogue sécurisé avec celui-ci ;
caractérisé en ce qu'il comprend :
- un module de sécurité (17) permettant de détecter tout rejeu, pour éviter une réémission d'un document vers un même destinataire sans que celui-ci ne puisse s'en apercevoir, d'assurer une non-répudiation en émission et en réception, et une vérification d'intégrité de l'ensemble des informations transmises, en utilisant un mécanisme de production et de vérification de signatures numériques ; ce module de sécurité (17) comprenant un lecteur de cartes à mémoire apte à lire une carte à mémoire propre à l'utilisateur dans laquelle sont stockés :
- un premier élément secret qui est un code confidentiel, permettant à la carte d'authentifier son légitime propriétaire ;
- un second élément secret (S_{A}) qui permet à la carte de l'émetteur de calculer une clé de session commune avec la carte du destinataire, cette clé de session servant à chiffrer le document ;
- un troisième élément secret qui permet à la carte de l'émetteur de calculer une signature numérique, vérifiable par n'importe quelle autre carte appropriée ;
- et l'identifiant de l'utilisateur.

4. Télécopieur selon la revendication 3, caractérisé en ce qu'il comprend un module de chiffrement et de déchiffrement (18).

## Patentansprüche

1. Vorrichtung zur sicheren Fernkopierübertragung, umfassend:
- eine Benutzer-Schnittstelle (16), die ermöglicht, einen Dialog mit diesem herzustellen;
**dadurch gekennzeichnet,** daß sie umfaßt:
- einen Sicherheitsmodul (17), der ermöglicht, jede Wiedergabe zu detektieren, um eine Wiederaussendung eines Dokuments an denselben Empfänger zu vermeiden, ohne daß dieser es feststellen kann, eine Nicht-Ablehnung bei Sendung und Empfang sicherzustellen und eine Überprüfung der Vollständigkeit der übertragenen Informationen, indem ein Erzeugungs- und Überprüfungsmechanismus digitaler Signaturen benutzt wird, wobei dieser Sicherheitsmodul (17) einen Speicherkartenleser umfaßt, der fähig ist, eine dem Benutzer gehörende Speicherkarte zu lesen, in der gespeichert sind:
- ein erstes geheimes Element, gebildet durch einen vertraulichen Code, der der Karte ermöglicht, ihren legitimen Be.sitzer zu authentifizieren;
- ein zweites geheimes Element (S_{A}), das der Karte des Senders ermöglicht, mit der Speicherkarte des Empfängers einen gemeinsamen Sitzungschlüssel zu berechnen, wobei dieser Sitzungsschlüssel dazu dient, das Dokument zu verschlüsseln;
- ein drittes geheimes Element, das der Speicherkarte des Senders ermöglicht, eine digitale Signatur zu berechnen, überprüfbar durch jede andere entsprechende Karte;
- und das Kennzeichen des Benutzers.

2. Vorrichtung nach Anspruch 1, dadurch gekennzeichnet, daß sie einen Verschlüsselungs- und Entschlüsselungsmodul (18) umfaßt.

3. Sicherer Fernkopierer, umfassend:
- ein Kontrollorgan (12);
- einen Benutzer-Schnittstellenmodul, der ermöglicht, mit diesem einen sicheren Dialog herzustellen;
**dadurch gekennzeichnet,** daß er umfaßt:
- einen Sicherheitsmodul (17), der ermöglicht, jede Wiedergabe zu detektieren, um eine Wiederaussendung eines Dokuments an denselben Empfänger zu vermeiden, ohne daß dieser es feststellen kann, eine Nicht-Ablehnung bei Sendung und Empfang sicherzustellen und eine Überprüfung der Vollständigkeit der übertragenen Informationen, indem ein Erzeugungs- und Überprüfungsmechanismus digitaler Signaturen benutzt wird, wobei dieser Sicherheitsmodul (17) einen Speicherkartenleser umfaßt, der fähig ist, eine dem Benutzer gehörende Speicherkarte zu lesen, in der gespeichert sind:
- ein erstes geheimes Element, gebildet durch einen vertraulichen Code, der der Karte ermöglicht, ihren legitimen Besitzer zu authentifizieren;
- ein zweites geheimes Element (S_{A}), das der Karte des Senders ermöglicht, mit der Speicherkarte des Empfängers einen gemeinsamen Sitzungschlüssel zu berechnen, wobei dieser Sitzungsschlüssel dazu dient, das Dokument zu verschlüsseln;
- ein drittes geheimes Element, das der Speicherkarte des Senders ermöglicht, eine digitale Signatur zu berechnen, überprüfbar durch jede andere entsprechende Karte;
- und das Kennzeichen des Benutzers.

4. Fernkopierer nach Anspruch 3, dadurch gekennzeichnet, daß er einen Verschlüsselungs- und Entschlüsselungsmodul (18) umfaßt.

## Claims

1. Device for rendering secure the transmission of faxes comprising a user interface (16) making it possible to establish a dialogue therewith, characterized in that it comprises a security module (17) making it possible to detect replays, prevent a retransmission of a document to the same recipient without the latter noticing it, ensure the non-repudiation on transmission and reception, and the integrity check of all the transmitted informations using a mechanism for producing and checking digital signatures; said security module comprising a smart card reader individual to the user and in which are stored:
- a first secret element which is a confidential code enabling the card to authenticate its legitimate owner,
- a second secret element (S_{A}) enabling the card of the transmitter to calculate a session key common to the smart card of the recipient, said session key being used for encrypting the document,
- a third secret element enabling the smart card of the transmitter to calculate a digital signature, which can be verified by any random other appropriate card,
- and the user identification.

2. Securizing device according to claim 1, characterized in that it comprises an encrypting and decrypting module (18).

3. Securizing device according to claim 1, characterized in that it comprises:
a checking member (12), a communication module (13), a user interface (16) making it possible to establish a securized dialogue therewith and
characterized in that it comprises a security module (17) making it possible to detect replays, prevent a retransmission of a document to the same recipient without the latter noticing it, ensure non-repudiation in transmission and reception, as well as the integrity checking of all the transmitted informations using a mechanism for producing and checking digital signatures, said security module (17) comprising a smart card reader, individual to the user and in which are stored:
- a first secret element which is a confidential code enabling the card to authenticate its legitimate owner,
- a second secret element (S_{A}) enabling the card of the transmitter to calculate a session key common to the smart card of the recipient, said session key being used for encrypting the document,
- a third secret element enabling the smart card of the transmitter to calculate a digital signature, which can be verified by any random other appropriate card,
- and the user identification.

4. Fax unit according to claim 3, characterized in that it comprises an encrypting and decrypting module (18).
